Europäisches Patentamt

**European Patent Office**

**Office européen des brevets**

(19)

(11) Publication number: **0 038 721**
**B1**

(12) **EUROPEAN PATENT SPECIFICATION**

(45) Date of publication of patent specification: **14.03.84**

(51) Int. Cl.³: **C 08 L 95/00**

(21) Application number: **81301775.3**

(22) Date of filing: **22.04.81**

(54) **Bitumen-containing compositions.**

(30) Priority: **23.04.80 FR 8009122**

(43) Date of publication of application:
**28.10.81 Bulletin 81/43**

(45) Publication of the grant of the patent:
**14.03.84 Bulletin 84/11**

(84) Designated Contracting States:
**BE DE FR GB IT NL SE**

(56) References cited:
**FR - A - 2 265 823**

(73) Proprietor: **Esso Société Anonyme Française**
**6 Avenue André Prothin**
**F-92400 Courbevoie (FR)**

(72) Inventor: **Boyer, Gerard Alphonse Maurice**
**20 rue André Malraux Notre Dame de Bondeville**
**F-76150 Maromme (FR)**
Inventor: **Duvdevani, Ilan**
**559 Nordhoff Drive**
**Leonia New Jersey 07605 (US)**
Inventor: **Muller, Jean-Marie Alfred Francois**
**26 rue Maurice Utrillo**
**F-76420 Bihorel (FR)**

(74) Representative: **Field, Roger Norton et al,**
**ESSO Engineering (Europe) Ltd. Patents &**
**Licences Apex Tower High Street**
**New Malden Surrey KT3 4DJ (GB)**

**EP 0 038 721 B1**

Courier Press, Leamington Spa, England.

Bitumen-containing compositions

This invention relates to bitumen compositions which contain polymers which modify the properties of bitumen.

Various industries, especially the roofing industry require bitumen which has a good resistance to creep as well as having elastic properties. In the past polymers, usually styrene-butadiene copolymers, have been added to bitumen to achieve these properties. However, such blends have been found to have a reduced stability towards oxidation and are sensitive to U.V. radiation with the result that they age rather quickly.

We have now discovered compositions which have good resistance to creep without having the above-mentioned disadvantages of the prior art compositions.

French patent specification 2265823 claims a composition comprising a bitumen having attached to at least a part thereof carboxylic acid groups and/or anhydride groups and/or groups derived therefrom with (a) a polymer or copolymer (1) to which also such groups are attached and/or (b) a polymer or copolymer (2) having attached thereto are at least two functional groups which are groups different from those attached to bitumen, the quantity of polymer or copolymer (2) being a maximum of 20% by weight of the composition. The compositions of that invention rely on binding together the polymer or copolymers with the bitumen by coupling with added metallic ions or by reacting together, the functional groups of the polymer and the bitumen. By contrast in the compositions of our invention although the polymer molecules are bonded together there is no significant involvement of the bitumen molecules in their bonding.

According to this invention a bitumen-containing composition comprises bitumen and a minor by weight of an elastomeric or thermoplastic polymer having one or more neutralised anionic groups covalently bonded thereto wherein substantially all the bitumen is unmodified.

Bitumen i.e. bituminous crude petroleum residue, is the residue remaining after removal of volatile constituents of crude petroleum, usually by distillation. This distillation is normally conducted at atmospheric pressure followed by reduced pressure treatment. The bituminous residue remaining after the reduced pressure treatment is referred to as a vacuum residue. Bitumens which are suitable include reconstituted asphalts obtained by blending distillates or extracts with hard asphalts or residuals (e.g. precipitated asphaltenes) and asphalts resulting from the air blowing of soft bottoms.

Bitumen is commonly classified by penetration grade. The penetration of a bitumen is a measure of its resistance to deformation and is the depth expressed in 0.1 mm, a needle of standardised dimensions penetrates under standardised conditions into this bitumen. The values of the penetration mentioned in this specification are those determined by means of ASTM method D-5. Bitumens having a penetration ranging from 5 to 200 at 25°C may be regarded as relatively hard. Preferred bitumens for use in the compositions of this invention have a penetration of 180 to 220 at 25°C, e.g. 200 at 25°C. However harder grades (e.g. 80 to 100) are compatible and could be suitable for special uses.

The penetration index of a bitumen indicates the temperature susceptibility of the penetration and is calculated from the slope of the decimal logarithm of the penetration versus the temperature in °C. This penetration index (PI) is defined as

$$\frac{20-500a}{1+50a}$$

where a is the slope of the decimal logarithm of the penetration versus temperature. The higher the penetration index the lower the temperature susceptibility. As will be seen later compositions of this invention have greatly improved penetration index compared with the bitumen before the incorporation therein of the elastic polymer.

The composition of this invention contains a minor proportion by weight of polymer having one or more neutralised anionic groups covalently bonded thereto. The groups are covalently bonded to one or more carbon atoms of the polymer. The anionic groups may be carboxylate or phosphonate groups and examples of suitable polymers containing carboxylate groups are inter-polymers (especially low unsaturated polymers) of acrylic or methacrylic acids with olefins and/or conjugated diolefins. It is preferred however that the anionic group be a sulphonate group.

Neutralized sulphonated polymers are derived from either thermoplastic or elastomeric polymers having either olefinic or aromatic unsaturation sites. In particular, unsaturated elastomeric polymers include low unsaturated polymers such as Butyl rubber and EPDM, and high unsaturation polymers such as polybutadiene and polyisoprene. In addition to these elastomers, suitable sulphonated polymers may be prepared from plastic polymers prepared by the polymerization of ethylene or propylene with multiolefins such as 1,4-hexadiene, dicyclopentadiene, norbornadiene, 5-methylene-2-norbornene, 5-ethylidene-2-norbornene, 5-propenyl-2-norbornene and 1,5-cyclooctadiene. Preferably these polymers have incorporated therein 0.2 to 10 mole % unsaturation: more preferably 0.5 to 6%. An example of these plastic like polymers is a product containing 90 mole % ethylene, 6 mole % propylene, and 4 mole % of diene monomer. The high ethylene content of these systems provides a more plastic-like material than the EPDM rubbers discussed below. The preferred polymers are based on EPDM.

Though the term "olefinic unsaturation" does not include aromatic unsaturation, the polymer backbone may contain aromatic rings either within the backbone structure or pendant therefrom. Sulphonation, however, is preferentially carried out at the site of olefinic unsaturation rather than on the aromatic ring.

The term "EPDM" is used in the sense of its definition as found in ASTM D-1418-64 and is intended to mean a terpolymer containing ethylene and propylene in the backbone and unsaturation in the side chain. Illustrative methods for producing these terpolymers are found in U.S. Patent 3,280,082, British Patent 1,030,289 and French Patent 1,386,600. The preferred EPDM polymers contain 45 to 85 wt. % ethylene and 2 to 10 wt. % of a diene monomer, the balance of the polymer being propylene. Preferably, the polymer contains 70 to 80 wt.% ethylene, e.g. 76 wt.% and 2 to 8 wt.% diene monomer, e.g. 5 wt.%. The diene monomer is preferably a nonconjugated diene.

Examples of these non-conjugated diene monomers which may be used in the terpolymer (EPDM) are 1,4-hexadiene, dicyclopentadiene, 5-ethylidene-2-norbornene, 5-methylene-2-norbornene, 5-propenyl-2-norbornene, and methyl tetrahydroindene. A preferred EPDM is a terpolymer having a Mooney viscosity (ML, 1+8, 100°C) of 20 and having an ethylene content of 75 wt.% and a 5-ethylidene-2-norbornene content of 5.0 wt.%. Its $\overline{M}n$ is 40,000, the $\overline{M}v$ is 142,000 and the $\overline{M}w$ is 125,000.

The EPDM terpolymers used in the compositions of this invention usually have a number average molecular weight ($\overline{M}n$) of 10,000 to 200,000 more preferably of 15,000 to 100,000, for example 20,000 to 60,000. The Mooney viscosity (ML, 1+8, 100°C) of the EPDM terpolymer is usually 5 to 60, preferably 10 to 50, for example 15 to 40. The $\overline{M}v$ of the EPDM terpolymer is preferably below 350,000 and more preferably below 300,000. The $\overline{M}w$ of the EPDM terpolymer is preferably below 500,000 and more preferably below 350,000.

Typical representative examples of thermoplastic polymers useful in the present invention include sulphonated polystyrene, sulphonated polytertiary butylstyrene or sulphonated poly-$\alpha$-methylstyrene. Preferably, the thermoplastic to be sulphonated will be polystyrene.

To sulphonate the polymer, the elastomeric or thermoplastic polymer is dissolved in a non-reactive solvent such as a chlorinated aliphatic hydrocarbon, chlorinated aromatic hydrocarbon, an aromatic hydrocarbon, or an aliphatic hydrocarbon such as carbon tetrachloride, dichloroethane, chlorobenzene, benzene, toluene, xylene, cyclohexane, pentane, isopentane, hexane, isohexane or heptane. A sulphonating agent is added to the solution of the elastomeric polymer and non-reactive solvent at a temperature usually of −10°C to 100°C for a period of time of about 1 to 60 minutes. Suitable sulphonating agents are acyl sulphates, a mixture of sulphuric acid and an acid anhydride or a complex of a sulphur trioxide donor and a Lewis base containing oxygen, sulphur, or phosphorus. Typical sulphur trioxide donors are $SO_3$, chlorosulphonic acid, sulphuric acid and oleum. Typical Lewis bases are dioxane, tetrahydrofuran, tetrahydrothiophene and triethylphosphate. The most preferred sulphonation agent is an acyl sulphate for example, benzoyl, acetyl, propionyl or butyryl sulphate.

The sulphonating agent and the manner of sulphonation are not critical provided that the sulphonation does not degrade the polymeric backbone. The reaction mixture may be quenched with an aliphatic alcohol such as methanol, ethanol, isopropanol with an aromatic hydroxyl compound, such as phenol, a cycloaliphatic alcohol such as a cyclohexanol or with water. The acid form of the sulphonated polymer usually has 5 to 100 meq. acid groups per 100 grams of sulphonated polymer, preferably 10 to 50; for example 20 to 40 meq. acid groups per 100 gm. The meq. of acid groups/100 grams of polymer may be determined by both titration of the polymeric sulphonic acid and Dietert Sulphur analysis.

Neutralisation of the acid form of the sulphonated polymer or of the polymer containing other anionic groups may be by the addition of a solution of a salt of a carboxylic acid, for example a metal acetate, to the acid form of the polymer dissolved in the reaction mixture, e.g. of the aliphatic alcohol and non-reactive solvent. The carboxylate may be dissolved in a binary solvent system consisting of water and an aliphatic alcohol. Examples of suitable acetates are sodium acetate, barium acetate, magnesium acetate, aluminium acetate, potassium acetate, lead acetate and zinc acetate. Zinc acetate is preferred. Alternatively soluble hydroxides, amines or ammonium salts may be used.

If possible, the preferred order for neutralising agents is $M^z(OH)_z > M^z(OOCCH_3)_z > M^zCl_z$ where M is the metal of valency z. For zinc the preferred neutralisation agent is zinc acetate, for magnesium it is magnesium chloride and for potassium it is potassium hydroxide.

Sufficient neutralisation agent is added to the solution of the acid polymer to neutralize the $SO_3H$ or other anionic groups. It is preferable to neutralise at least 95% of the acid groups, more preferably 98% and most preferably 100% of the acid groups.

A particularly preferred neutralised polymer is a zinc neutralised sulphonic acid of a copolymer containing 75 wt.% ethylene, 20 wt.% propylene and 5 wt.% of 5-ethylidene-2-norbornene with a sulphonation level of 20 meq. acid groups per 100 gm of sulphonated polymer.

The neutralised polymer is incorporated in the bitumen-containing composition in minor proportion by weight, preferably less than 25% by weight, more preferably 5 to 25% by weight for example about 10% by weight.

The neutralised polymer is blended into the bitumen by straight addition of the cold powdered polymer in the hot bitumen at a temperature of 120 to 220°C, preferably 180°C. The polymer could be used as chippings or granulates. Mixing is provided either by a high shear device like turbines, by propellers or by heavy duty mixers (for example WERNER, NABEN). The mixing time ranges from a few minutes up to 5 hours, according to the mixing device.

If desired a filler such as carbon black, talc, ground calcium carbonate or silica can be incorporated in the mixture of polymer and bitumen. The amount of filler can be for example from 1 to 50 parts by weight per 100 parts by weight of bitumen.

It has been found that compared with bitumen alone the composition of the invention has increased softening point and in fact softening points of greater than 100°C can be achieved. Also the penetration index is greatly improved. Also it has been found that the compositions of the invention have penetrations close to those of oxidised bitumens.

Furthermore, it has been found that the elastic recovery after stretching is good and in fact recoveries as high as 95% have been achieved. This compares with conventional oxidised bitumens which have no elastic recoveries. However, the presence of the neutralised polymer in the composition does increase the viscosity but the latter is low enough at normal processing temperatures.

Another advantage of the compositions of this invention is that the neutralised polymers maintain their softening point after ageing and keep their relaxation time whereas other elastomeric polymers e.g. styrene/butadiene block copolymers do not. Also the compositions of this invention withstand overheating up to 230°C without changes in the final properties which is not so for some other polymer-asphalt blends.

Also it has been observed that at high strains, e.g. of the order of 300%, the compositions of this invention are not destroyed and the developed strength is characteristic of a flexible product.

The invention is now illustrated by the following Examples.

Example 1

A blend of 90 wt.% Aramco bitumen of 200 penetration grade (an Arabian light) and 10 wt.% of neutralised sulphonated polymer was prepared by hot stirring at 200°C for a total blending time of 1 hour. The polymer was a copolymer containing 75 wt.% of ethylene, 20 wt.% of propylene and 5 wt.% of 5-ethylidene-2-norbornene sulphonated to a level of 20 millimoles $SO_3H$ groups per 100 gm polymer which was 100% neutralised with zinc acetate. The polymer had a Mooney viscosity (ML, 1+8, 100°C) of 20, an $\overline{M}n$ of 40,000, an $\overline{M}w$ of 142,000 and an $\overline{M}v$ of 125,000.

The following table shows the properties of the blend of the invention compared with bitumen alone and a conventional oxidised bitumen.

| | Pure Aramco bitumen | Aramco bitumen +10% polymer | Oxidized bitumen |
|---|---|---|---|
| Softening point °C | 38.5 | 88 | 102 |
| Penetration 25°C, 100 g d mm | 193 | 42 | 39 |
| Penetration index | —1.9 | 3.4 | 5.0 |
| % Elastic recovery after a 50% strain | 0 | 80 | Broken |
| Viscosity 160°C, 30 s⁻¹ m Pa.s | 100 | 3200 | 7500 |
| Tensile strength (300% strain) Nm⁻² | $<5.0 \times 10^3$ | $2.5 \times 10^5$ | Broken |

Example 2

The procedure of Example 1 was repeated exactly except that a Safaniya bitumen which is an Arabian heavy was used. The results obtained were as follows

| | Safaniya bitumen +10% polymer | Pure Safaniya bitumen |
|---|---|---|
| Softening point, °C | 92.5 | 39.5 |
| Penetration 25°C/100 g/dmm | 44 | 177 |
| Penetration index | 3.2 | —1.4 |
| % Elastic recovery after a 50% strain | 90 | 0 |
| Viscosity 160°C, 30 s⁻¹ m Pa.s | 4000 | 120 |
| Tensile strength (300% strain), N.m⁻² | $3.6 \times 10^5$ | $<5.0 \times 10^3$ |

Example 3

The procedure of Example 2 was repeated exactly except that in one run a filler i.e. silica was incorporated, there being 90 parts by weight of Safaniya bitumen, 10 parts by weight of polymer and 20 parts by weight of powdered silica. The blending procedure was the same except that a further 30 minutes was allowed to disperse the filler. The results obtained were as follows:

| | Safaniya bitumen +polymer+silica | Safaniya bitumen (90 wt.%) +polymer (10 wt.%) |
|---|---|---|
| Softening point, °C | 101 | 104 |
| Penetration 25°C/100 g/dmm | 30 | 35 |
| % Elastic recovery after a 50% strain | 83 | 87 |
| Viscosity 160°C, 30 s$^{-1}$ m Pa.s | 28,000 | 11,000 |
| Tensile strength (300% strain), N.m$^{-2}$ | $3.1 \times 10^6$ | $5.3 \times 10^5$ |

## Experimental procedures

| | |
|---|---|
| Softening point: | measured according to ASTM |
| Penetration: | measured according to ASTM |
| Penetration index: | the penetration index is calculated as follows: a least square linear regression is performed between the decimal logarithm of penetration and temperature expressed in °C. The temperature ranges between 0 to 30°C. The penetration index (PI) is computed from the slope "a" according to the formula: |

$$PI = \frac{20 - 500\,a}{1 + 50\,a}$$

| | |
|---|---|
| Elastic recovery: | non standard method. A 2 mm thickness strip of polymer-bitumen blend is subjected during 24 hours to a 50% elongation. The recovery, after another 24 hour rest, is expressed as a percentage of the imposed strain. A perfectly rubbery product has a 100% recovery, whilst a viscous one yields a 0% recovery. |
| Viscosity: | measured with a coaxial cylinder system (Contraves Rheomat 30), viscosity is given at a 30 s$^{-1}$ shear rate only; this shear rate can be considered as representative of shear rate occurring in manufacturing equipment. Anyway, at 160°C, the impact of shear rate is limited. |
| Tensile strength: | non standard method. A strip, 2 mm thickness and 5 cm length is stretched (450 mm/mm) until it breaks; the tensile strength is continuously recorded. |
| Stiffness modulus: | non standard method. Measured with the ENRAF-NONIUS sliding plate rheometer. |
| Relaxation experiments: | performed on 2 mm thickness strips, subjected to a 50% tensile strain. The decay of the strength is recorded, and the calculated relaxation time is the "maximum relaxation time", according to Tobolsky. |
| Ageing: | it is performed by storing a sheet of the polymer-bitumen blend in a ventilated oven, at 70°C, for 6 months. |

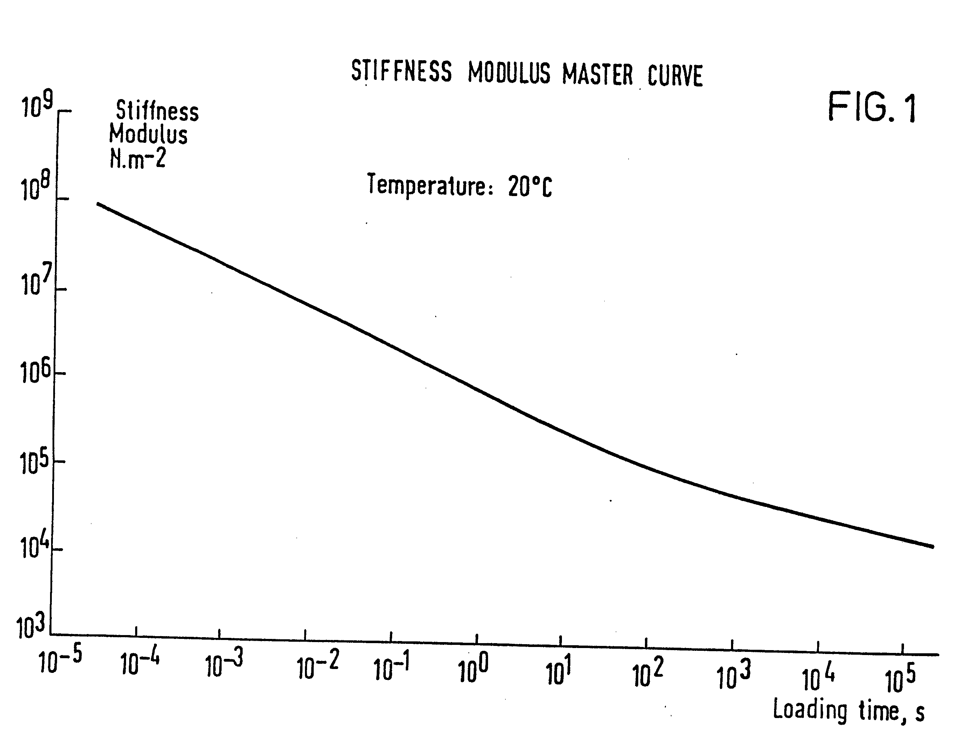

In figure 1 the stiffness modules is plotted against loading time. At high loading time a so-called rubbery plateau appears and this means that creep will not be a problem and that at long loading times the blend has elastic behaviour.

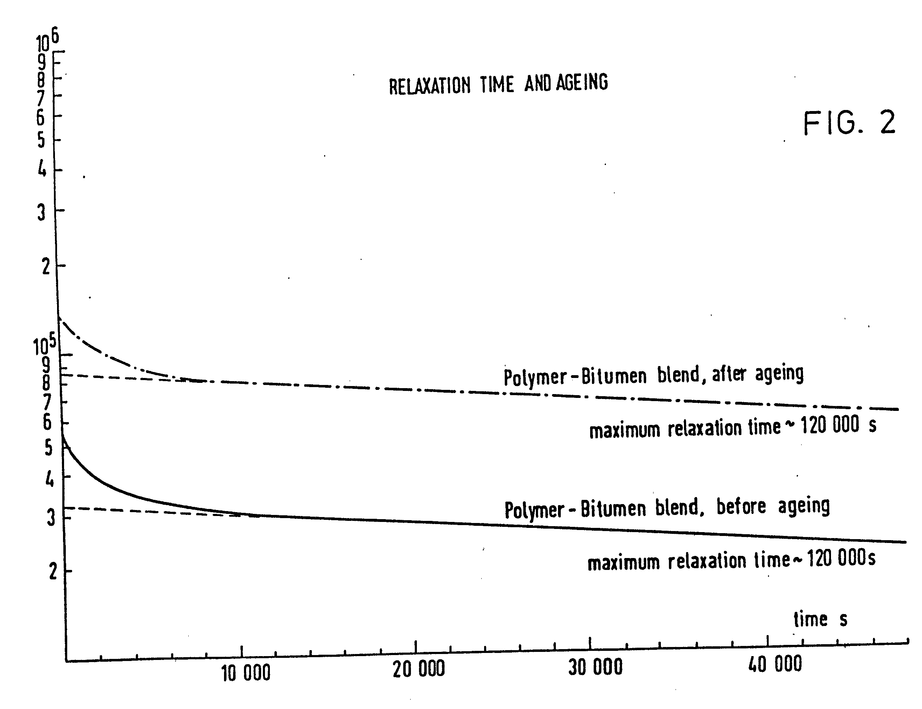

In Figure 2 relaxation tensile strength is plotted against time. From this it can be seen that the loss of tensile strength is very slow after a few thousand seconds. Also there is a good ageing behaviour, and the shift of the tensile strength is merely a slight hardening of the polymer-bitumen blend. The constancy of the relaxation time means that no major alteration of the polymer occurred.

## Claims

1. A bitumen-containing composition comprising bitumen and a minor proportion by weight of an elastomeric or thermoplastic polymer having one or more neutralised anionic groups covalently bonded thereto wherein substantially all the bitumen is unmodified.

2. A composition according to claim 1 wherein the bitumen has a penetration of 180 to 220 at 25°C.

3. A composition according to either of claims 1 and 2 wherein the anionic group is a sulphonate group.

4. A composition according to any one of the preceding claims wherein the polymer is an elastomeric polymer.

5. A composition according to claim 4 wherein the polymer is a copolymer of ethylene, propylene and a diene.

6. A composition according to claim 5 wherein the copolymer comprises 45 to 85 wt.% ethylene, 2 to 10 wt.% of a diene and the balance propylene.

7. A composition according to either of claims 5 and 6 wherein the polymer has an $\overline{M}n$ of 10,000 to 200,000, and $\overline{M}v$ of below 350,000 and $\overline{M}w$ of below 500,000 and a Mooney viscosity (ML, 1+8, 100°C) of 5 to 60.

8. A composition according to any one of claims 3 to 7 wherein the acid form of the sulphonated polymer has 5 to 100 meq. acid groups, preferably 10 to 50 meq. acid groups, per 100 gm of sulphonated polymer.

9. A composition according to any one of the preceding claims wherein the polymer is a zinc neutralised polymer.

10. A composition according to any one of the preceding claims wherein at least 95% of the anionic groups have been neutralised.

11. A composition according to any one of the preceding claims which contains 5 to 25 wt.% of the neutralised polymer.

## Patentansprüche

1. Bitumenhaltige Zusammensetzung, dadurch gekennzeichnet, daß sie Bitumen und einen geringeren Gewichtsanteil eines elastomeren oder thermoplastischen Polymeren mit einer oder mehreren, daran kovalent gebundenen, neutralisierten, anionischen Gruppen enthält, wobei im wesentlichen das gesamte Bitumen nicht modifiziert ist.

2. Zusammensetzung nach Anspruch 1, dadurch gekennzeichnet, daß das Bitumen bei 25°C eine Penetration von 180 bis 220 aufweist.

3. Zusammensetzung nach Anspruch 1 oder 2, dadurch gekennzeichnet, daß die anionische Gruppe eine Sulfonatgruppe ist.

4. Zusammensetzung nach einem der vorangehenden Ansprüche, dadurch gekennzeichnet, daß das Polymer ein elastomeres Polymer ist.

5. Zusammensetzung nach Anspruch 4, dadurch gekennzeichnet, daß das Polymer eine Copolymer aus Ethylen, Propylen und einem Dien ist.

6. Zusammensetzung nach Anspruch 5, dadurch gekennzeichnet, daß das Copolymer 45 bis 85 Gew.% Ethylen, 2 bis 10 Gew.% eines Diens und im übrigen Propylen enthält.

7. Zusammensetzung nach Anspruch 5 oder 6, dadurch gekennzeichnet, daß das Polymer ein $\overline{M}n$ von 10000 bis 200000, ein $\overline{M}v$ von weniger als 350000, ein $\overline{M}w$ von weniger als 500000 und und eine Mooney-Viskosität (ML, 1+8, 100°C) von 5 bis 60 besitzt.

8. Zusammensetzung nach einem der Ansprüche 3 bis 7, dadurch gekennzeichnet, daß die Säureform des sulfonierten Polymeren 5 bis 100 Milliäquivalente Säuregruppen und vorzugsweise 10 bis 50 Milliäquivalente Säuregruppen je 100 g des sulfonierten Polymeren enthält.

9. Zusammensetzung nach einem der vorangehenden Ansprüche, dadurch gekennzeichnet, daß das Polymer ein zinkneutralisiertes Polymer ist.

10. Zusammensetzung nach einem der vorangehenden Ansprüche, dadurch gekennzeichnet, daß mindestens 95% der anionischen Gruppen neutralisiert worden sind.

11. Zusammensetzung nach einem der vorangehenden Ansprüche, dadurch gekennzeichnet, daß sie 5 bis 25 Gew.% des neutralisierten Polymeren enthält.

## Revendications

1. Composition à base de bitume, comprenant du bitume et une proportion pondérale mineure d'un polymère élastomère ou thermoplastiques ayant, lié(s) par covalence, un ou plusieurs groupes anioniques neutralisés, dans laquelle la quasi-totalité du bitume n'est pas modifiée.

2. Composition selon la revendication 1, dans laquelle le bitume présente une pénétration de 180 à 220 à 25°C.

3. Composition selon l'une des revendications 1 et 2, dans laquelle le groupe anionique est un groupe sulfonate.

4. Composition selon l'une quelconque des revendications précédentes, dans laquelle le polymère est un élastomère.

5. Composition selon la revendication 4, dans laquelle le polymère est un copolymère de l'éthylène, du propylène et d'un diène.

6. Composition selon la revendication 5, dans laquelle le copolymère comprend 45 à 85% en poids d'éthylène, 2 à 10% en poids d'un diène et le reste est en propylène.

7. Composition selon l'une des revendications 5 et 6, dans laquelle le polymère a une $\overline{M}_n$ de 10.000 à 200.000, une $\overline{M}_v$ inférieure à 350.000, une $\overline{M}_p$ inférieure à 500.000, et une viscosité Mooney (ML, 1+8, 100°C) de 5 à 60.

8. Composition selon l'une quelconque des revendications 3 à 7, dans laquelle la forme acide du polymère sulfoné comporte 5 à 100 milliéquivalents de groupes acides, de préférence 10 à 50 milliéquivalents de groupes acides, pour 100 g du polymère sulfoné.

9. Composition selon l'une quelconque des revendications précédentes, dans laquelle le polymère est un polymère neutralisé par le zinc.

10. Composition selon l'une quelconque des revendications précédentes, dans laquelle au moins 95% des groupes anioniques ont été neutralisés.

11. Composition selon l'une quelconque des revendications précédentes qui contient 5 à 25% en poids du polymère neutralisé.

STIFFNESS MODULUS MASTER CURVE

FIG. 1

Stiffness
Modulus
N.m⁻²

Temperature: 20°C

Loading time, s

0 038 721

RELAXATION TIME AND AGEING

FIG. 2

Polymer-Bitumen blend, after ageing

maximum relaxation time ~ 120 000 s

Polymer-Bitumen blend, before ageing

maximum relaxation time ~ 120 000s

time s

0 038 721